# EUROPÄISCHE PATENTANMELDUNG

(11) **EP 4 624 682 A1**
(43) Veröffentlichungstag der Anmeldung: **01.10.2025**
(21) Anmeldenummer: 25166879.4
(22) Anmeldetag: 28.03.2025
(51) Int. Cl.: E03B 3/02, A01G 9/033, E03F 5/10, E04D 11/00, A01G 25/00

(54) **NIEDERSCHLAGSMANAGEMENT-SYSTEM**

(30) Priorität: 28.03.2024 DE 102024108978
(71) Anmelder: Optigrün international AG, 72505 Krauchenwies-Göggingen (DE)
(72) Erfinder: Gößner, Dominik, 72505 Krauchenwies-Göggingen (DE); Fangauer, Johanna, 72505 Krauchenwies-Göggingen (DE)
(74) Vertreter: Maiwald GmbH

(57) **Zusammenfassung**

Die Erfindung betrifft ein Niederschlagsmanagement-System (1), umfassend
- ein Retentionsdach (2), das einen mehrschichtigen Aufbau aufweist, wobei eine der Schichten eine wasserführende Schicht (20) ist, sowie mit einem Kontrollschacht (3), der im mehrschichtigen Aufbau angeordnet ist,
- einen Wasserspeicher (4), der von der wasserführenden Schicht (20) verschieden ist,
- eine Rohrleitung (5), welche den Wasserspeicher (4) mit dem Kontrollschacht (3) verbindet, sowie
- eine Pumpe (6), welche dazu angeordnet und ausgebildet ist, Wasser aus dem Wasserspeicher (4) durch die Rohrleitung (5) in den Kontrollschacht (3) zu pumpen.

## Beschreibung

### TECHNISCHES GEBIET

Die Erfindung betrifft ein Niederschlagsmanagement-System, welches ein Retentionsdach umfasst, das einen mehrschichtigen Aufbau aufweist, wobei eine der Schichten eine wasserführende Schicht ist. Zum System gehört außerdem ein weiterer Wasserspeicher, der von der wasserführenden Schicht verschieden ist und aus dem Wasser auf das Retentionsdach gepumpt werden kann. Das Dach mit der wasserführenden Schicht ist bevorzugt ein Gründach oder ein Verkehrsdach.

### HINTERGRUND DER ERFINDUNG

In jüngster Zeit werden Dachbegrünungen und Verkehrsdächer nicht mehr nur zur statischen Aufnahme und Rückhaltung von Niederschlägen eingesetzt, sondern zunehmend zum aktiven Management der Niederschläge. Dabei wird der aufgefangene Niederschlag beispielsweise computergesteuert mittels regelbarer Abflüsse und/oder steuerbarer Pumpen weiter verteilt, wobei klimatische Einflüsse berücksichtigt und vorgegebene Wasserbilanzen erzielt werden können, wie dies zum Beispiel in der EP 3202995 A1 und EP 3757300 A1 der Anmelderin beschrieben ist. Die in diesem Zusammenhang eingesetzten Dachbegrünungen weisen in der Regel einen vielschichtigen Dachbegrünungsaufbau auf, der eine wasserführende Schicht umfasst. Gleiches gilt für Verkehrsdächer, bei denen anstelle einer oberen, bepflanzten Schicht ein begeh- oder befahrbarer Belag vorhanden ist. Häufig finden sich auch Dächer, die neben bepflanzten Bereichen begeh- oder befahrbare Bereiche aufweisen. Derartige Dächer, in denen Wasser in einer wasserführenden Schicht aufgenommen werden kann, werden häufig als Retentionsdächer bezeichnet. Diese Retentionsdächer enthalten ein Traggerüst, das den Hohlraum definiert, in dem das Wasser der wasserführenden Schicht aufgenommen werden kann. Derartige Traggerüste werden häufig von einer Vielzahl nebeneinander angeordneter kistenförmiger Bauelemente gebildet, die unter der Bezeichnung Wasser-Retentionsboxen bekannt sind. Im Rahmen dieser Anmeldung ist unter einem Dachaufbau grundsätzlich jeder Schichtaufbau zu verstehen, bei dem eine der Schichten eine wasserführende Schicht ist, unabhängig davon, ob sich diese über die gesamte Dachfläche oder nur einen Teil derselben erstreckt, und unabhängig davon, wie viele und welche Arten von Schichten sich oberhalb und unterhalb der wasserführenden Schicht befinden und für welche Verwendung diese vorgesehen sind. Auch hier kann der Schichtaufbau in verschiedenen Teilbereichen der Dachfläche unterschiedlich ausgebildet sein.

In solchen komplexen Dach-Schichtaufbauten ist üblicherweise wenigstens ein Kontrollschacht vorhanden, der beispielsweise über einem Dachabfluss aufgestellt ist. Der Kontrollschacht wird meist entweder direkt auf der Dachabdichtung (dann mit Öffnungen im unteren Bereich, um den Wasserfluss nicht zu stoppen) oder oberhalb der wasserführenden Schicht aufgestellt, das heißt, auf dem Traggerüst des Retentionsdaches. Der Kontrollschacht weist eine Seitenwandung auf, die den Innenraum gegenüber den an die Seitenwandung angrenzenden Schichten des Dach(begrünungs)aufbaus abgrenzt. Nach unten, zur Dachabdichtung hin ist der Kontrollschacht zumindest teilweise und meist vollständig offen. In letzterem Fall ist der Innenraum also nach unten nicht von einer Bodenplatte begrenzt, in ersterem Fall ist wenigstens eine Öffnung in der Bodenplatte vorhanden. Dagegen ist der Kontrollschacht nach oben hin mit einem abnehmbaren Deckel oder einer Klappe verschlossen, sodass der Innenraum von oben her zugänglich bleibt. In der Regel befindet sich unterhalb des Innenraums des Kontrollschachtes keine Wasser-Retentionsbox bzw. kein Traggerüst. Dies ermöglicht den Zugriff auf Komponenten, die im Bereich des Innenraums angeordnet sind, bis hinunter zu Dachabdichtung und Dachabflüssen. Im Bereich des Innenraums angeordnete Komponenten können somit gewartet, repariert, falls erforderlich, ausgetauscht und gegebenenfalls ausgelesen werden. Es ist zum Beispiel möglich, im Innenraum eine Verarbeitungsvorrichtung anzuordnen, welche mit wenigstens einem Sensor verbunden ist, der im Bereich des Daches angebracht ist, um für das Wassermanagement relevante Daten zu ermitteln. Bei dem Sensor handelt es sich beispielsweise um einen Temperatursensor, der die Temperatur im Bereich des Daches misst, einen Bodenfeuchtemesser, der die Bodenfeuchte im Pflanzsubstrat eines Dachbegrünungsaufbaus ermittelt, oder einen oder mehrere Wasserstandsmesser zur Ermittlung des Wasserstandes in der wasserführenden Schicht und gegebenenfalls weiteren, dem Dachaufbau zugeordneten Wasserspeichern. Die Datenübertragung von dem wenigstens einen Sensor an die Verarbeitungsvorrichtung kann entweder über Kabel oder drahtlos erfolgen. In letzterem Fall ist die Verarbeitungsvorrichtung ein Empfänger oder umfasst einen solchen, der die drahtlos übermittelten Daten in Empfang nimmt. Die Verarbeitungsvorrichtung kann auch eine Speichervorrichtung sein, in der die Sensordaten vor der weiteren Bearbeitung abgespeichert werden. Die Auswertung der von den Sensoren übermittelten Daten erfolgt entweder in der Verarbeitungsvorrichtung selbst oder, bevorzugt, in einem außerhalb des Daches aufgestellten Computer. Erfolgt die Übertragung der Daten von der Verarbeitungsvorrichtung an den Computer nicht über Kabel, sondern drahtlos, befindet sich im Innenraum des Kontrollschachtes zu diesem Zweck noch ein Sender oder die Verarbeitungsvorrichtung ist ein Sender, welcher die empfangenen Daten unmittelbar weiterleitet.

Der vorstehend beschriebenen Stand der Technik beschäftigt sich in erster Linie damit, in welcher Weise Wasser aus der wasserführenden Schicht eines Dachaufbaus entfernt werden kann, insbesondere wenn Starkregenfälle drohen und die zu erwartende Niederschlagsmenge die Speicherkapazität der wasserführenden Schicht übersteigt. In solchen Fällen wird Wasser der wasserführenden Schicht entnommen und entweder der Kanalisation oder, bevorzugt, einem anderen Wasserspeicher wie einer unterirdischen Rigole zugeführt. In der EP 3 757 300 A1 ist außerdem beschrieben, dass das im anderen Wasserspeicher gespeicherte Wasser wieder zum Dachaufbau zurückgefördert werden kann. Ein Auslöser dafür kann Wassermangel im Dachaufbau sein, beispielsweise eine mittels eines Bodenfeuchtesensors festgestellte Trockenheit des Pflanzsubstrates einer Dachbegrünung oder ein zu niedriger Wasserstand in der wasserführenden Schicht des Dachaufbaus, der mithilfe eines Wasserstandssensors ermittelt wurde. Werden Sensor-Messwerte, die eine Wasserknappheit anzeigen, an die Verarbeitungs- und Steuervorrichtung des Systems übermittelt, veranlasst die Vorrichtung, dass Wasser aus dem anderen Wasserspeicher zum Dachaufbau gefördert wird. Konkret ist beschrieben, dass das Wasser an eine Bewässerungsvorrichtung geliefert wird, welche es auf den bepflanzten Bereichen der Dachbegrünung verteilt. Alternativ kann das Wasser auch in die wasserführende Schicht eingeleitet werden, von wo es von einer Bewässerungsvorrichtung entnommen werden kann.

Das vorstehend beschriebene System ermöglicht ein gezieltes Management des auf den Einzugsflächen gesammelten Niederschlags und eine vorausschauende Steuerung des der Bepflanzung einer Dachbegrünung zur Verfügung stehenden Wassers bei Vermeidung zu hoher und zu niedriger Wasserstände in der wasserführenden Schicht. Allerdings wurde im Betrieb des Systems festgestellt, dass dieses hinsichtlich des Aufbaus, der Flexibilität der Einsatzmöglichkeiten und der Wartungsfreundlichkeit noch verbesserungsfähig ist.

Aufgabe der Erfindung ist es daher, ein Niederschlagsmanagement-System der vorstehend geschilderten Art anzugeben, das hinsichtlich der Wasserführung im System besonders aufbau- und wartungsfreundlich sowie flexibel einsetzbar ist.

### ZUSAMMENFASSUNG DER ERFINDUNG

Die Lösung dieser Aufgabe gelingt mit dem Niederschlagsmanagement-System gemäß Anspruch 1. Bevorzugte Weiterbildungen des Kontrollschachtes sind in den von Anspruch 1 abhängigen Ansprüchen beschrieben.

In ihrem breitesten Aspekt betrifft die Erfindung also ein Niederschlagsmanagement-System, das ein Retentionsdach mit einem mehrschichtigen Aufbau umfasst, wobei eine der Schichten eine wasserführende Schicht ist. Außerdem ist auf dem Retentionsdach ein Kontrollschacht im mehrschichtigen Aufbau angeordnet. Das System weist weiterhin einen Wasserspeicher auf, der von der wasserführenden Schicht verschieden ist. Eine Rohrleitung verbindet den Wasserspeicher mit dem Kontrollschacht, und eine Pumpe ist dazu angeordnet und ausgebildet, Wasser aus dem Wasserspeicher durch die Rohrleitung in den Kontrollschacht zu pumpen.

Ein wesentlicher Unterschied des erfindungsgemäßen Niederschlagsmanagement-Systems gegenüber dem Stand der Technik besteht darin, dass das im Wasserspeicher gespeicherte Wasser nicht direkt einer Bewässerungsvorrichtung auf dem Dach zugeführt oder unmittelbar in die wasserführende Schicht des Dachaufbaus eingeleitet wird. Vielmehr erfolgt die Einleitung im erfindungsgemäßen System in den Kontrollschacht. Dies hat gegenüber den bekannten Möglichkeiten verschiedene Vorteile.

Bei der unmittelbaren Aufbringung des Wassers aus dem Wasserspeicher mittels einer Bewässerungsvorrichtung besteht der Nachteil, dass die Entnahme von Wasser aus dem Wasserspeicher nur dann sinnvoll ist, wenn tatsächlich Wasserknappheit herrscht und die Bepflanzung der Dachbegrünung Wasser benötigt. Wird zu anderen Zeiten einen Bewässerungsvorgang durchgeführt, besteht das Risiko, die Bepflanzung durch übermäßige Bewässerung und Erzeugung von Staunässe zu schädigen. Die Einspeisung des Wassers in den Kontrollschacht, von wo das Wasser dann in die wasserführende Schicht gelangt, eröffnet also hinsichtlich des Zeitpunkts der Wasserzufuhr erheblich bessere Möglichkeiten, da die Wassereinspeisung unabhängig von der Bodenfeuchte des Pflanzsubstrats erfolgen kann.

Eine derartige Bodenfeuchte-unabhängige Einspeisung war grundsätzlich auch bereits bei der direkten Einleitung von Wasser in die wasserführende Schicht des Dachaufbaus möglich. Dafür hat die Einleitung von Wasser direkt in die wasserführende Schicht andere Nachteile. Ein Nachteil besteht darin, dass die wasserführende Schicht des Dachaufbaus üblicherweise nur eine relativ geringe Höhe aufweist. Diese Höhe wird im Wesentlichen von der Höhe des Traggerüsts bestimmt, welches den Hohlraum definiert, in dem das Wasser aufgenommen wird. Wie eingangs bereits beschrieben, ist das Traggerüst in der Regel aus nebeneinander angeordneten Wasserretentionsboxen aufgebaut, die kistenförmig ausgebildet sind und im Inneren eine Gerüststruktur besitzen, welche eine von der Dachfläche weg nach oben gerichtete Auflagefläche stützt. Diese Konstruktion führt zum einen dazu, dass innerhalb der wasserführenden Schicht sehr wenig Platz vorhanden und dieser außerdem schlecht zugänglich ist. Die Anordnung und Befestigung eines Schlauches oder Rohres zur Einleitung des Wassers aus dem Wasserspeicher ist daher nur schlecht möglich. Zum anderen ist es besonders nachteilig, dass die wasserführende Schicht nach Fertigstellung des Dachaufbaus vollständig von den oberen Schichten des Dachaufbaus bedeckt und damit praktisch kaum mehr erreichbar ist, es sei denn, die Schichten werden zumindest partiell wieder abgetragen. Dies erschwert Wartungs- und Reparaturarbeiten erheblich.

Die beschriebenen Nachteile werden im erfindungsgemäßen Niederschlagsmanagement-System dadurch vermieden, dass Wasser aus dem Wasserspeicher über eine Rohrleitung in einen in den Dachaufbau integrierten Kontrollschacht eingeleitet wird. Derartige Kontrollschächte sind aus dem Stand der Technik bereits bekannt und, wie vorstehend beschrieben, in komplexeren Dachaufbauten üblicherweise ohnehin vorhanden. Zur Realisierung des erfindungsgemäßen Systems sind daher keine größeren Umbauten im Dachaufbau erforderlich, und es ist gegebenenfalls sogar möglich, bereits existierende Systeme auf das erfindungsgemäße System umzurüsten. Übliche Kontrollschächte weisen in ihrem Innenraum ausreichend Platz auf, um einen Endabschnitt der Rohrleitung, mit der Wasser aus dem Wasserspeicher zum Dachaufbau transportiert wird, sicher zu montieren. Die Anbringung der Rohrleitung im Kontrollschacht ist also unter weniger beengten Bindungen möglich als eine Anbringung in der wasserführenden Schicht und bietet zudem den Vorteil, dass ein späterer Zugriff ohne weiteres möglich ist. Dazu muss lediglich der Deckel, mit dem der Kontrollschacht üblicherweise verschlossen ist, geöffnet werden. Eine eventuell erforderliche Wartung, Reinigung oder Kontrolle sind somit in einfacher Weise möglich.

Bei dieser Gelegenheit sei angemerkt, dass unter dem Begriff "Rohrleitung" im Rahmen dieser Erfindung grundsätzlich jeder langgestreckte Hohlkörper zu verstehen ist, der sich zum Fördern von Wasser eignet. "Rohrleitung" meint also nicht nur steife Rohre aus einem geeigneten Material wie Metall oder Kunststoff, sondern auch flexible Schläuche, die in der Regel aus Kunststoff bestehen werden, aber nicht müssen. Selbstverständlich können zur Überbrückung der Strecke vom Wasserspeicher zum Kontrollschacht auch Kombinationen unterschiedlicher Komponenten und Materialien verwendet werden. Beispielsweise kann es sich anbieten, für den Endabschnitt der Rohrleitung im Kontrollschacht zumindest abschnittweise ein Schlauchstück zu verwenden, insbesondere wenn es Krümmungen im Verlauf der Rohrleitung gibt, um die Verlegung und Montage zu erleichtern. Welche Art von Rohrleitung gewählt wird, richtet sich in an sich bekannter Weise nach der geplanten Verwendung, wobei insbesondere bei der Auswahl des Innendurchmessers die benötigte Förderleistung und bei Material und Wandstärke der erforderliche Förderdruck zu berücksichtigen sind.

Auch die übrigen Komponenten des erfindungsgemäßen Niederschlagsmanagement-Systems können grundsätzlich Komponenten des Standes der Technik entsprechen, die bereits für den gleichen Zweck eingesetzt wurden. Als Pumpe ist sowohl eine Tauchpumpe geeignet, die in das Wasser des Wasserspeichers eintaucht, als auch eine außerhalb des Wasserspeichers angeordnete Pumpe. Letztere hat in der Regel den Vorteil, dass sie in einer leichter zugänglichen Position aufgestellt und damit besser kontrolliert, gewartet und repariert werden kann.

Auch der im erfindungsgemäßen Niederschlagsmanagement-System verwendete Kontrollschacht kann im Wesentlichen einem Kontrollschacht des Standes der Technik entsprechen und besteht zweckmäßig aus dem bereits im Stand der Technik verwendeten Material, wobei es sich in der Regel um ein Metall und vorzugsweise um Aluminium oder Edelstahl handeln wird. Der Kontrollschacht muss lediglich insoweit angepasst werden, dass Wasser aus der Rohrleitung in den Innenraum des Kontrollschachtes eingeleitet werden kann. Grundsätzlich ist dies beispielsweise über die obere Öffnung und gegebenenfalls durch einen diese verschließenden Deckel hindurch möglich, der zu diesem Zweck mit einer Öffnung versehen wird. Diese Variante ist allerdings weniger bevorzugt, da in diesem Fall ein Abschnitt der Rohrleitung über die Oberfläche des Dachaufbaus geführt werden muss und zudem das Öffnen des Deckels erschwert werden kann. Bevorzugt sind daher andere Varianten, wie diejenige, im Bereich der Seitenwandung, welche den Innenraum des Kontrollschachtes seitlich begrenzt, eine Durchgangsöffnung vorzusehen, durch welche Wasser aus dem Wasserspeicher in den Innenraum des Kontrollschachtes eingeleitet wird. Dies hat den Vorteil, dass die Rohrleitung nicht auf der Oberfläche des Dachaufbaus im Weg, sondern im Dachaufbau versenkt und damit besser gegen Beschädigung geschützt ist, und diese Lösung insgesamt auch optisch ansprechender ist.

In einer Anschlussmöglichkeit ist an die Seitenwandung im Bereich der Durchgangsöffnung ein Adapter montiert, an welchen ein Ende der Rohrleitung angeschlossen wird. Derartige Adapteranschlüsse für Rohre oder Schläuche sind grundsätzlich bekannt und müssen daher hier nicht im Einzelnen beschrieben werden. Üblicherweise umfassen sie eine sich nach außen verjüngende Tülle, auf die das Ende der Rohrleitung aufgeschoben und dort zweckmäßig gesichert wird, beispielsweise mittels einer Rohrschelle. Auf der Innenseite der Seitenwandung ist zweckmäßig im Bereich der Durchgangsöffnung eine weitere Rohrleitung angeschlossen, mit der das Wasser in Richtung auf die wasserführende Schicht des Dachaufbaus, das heißt, in Richtung auf die untere Öffnung des Kontrollschachtes hin, geführt wird.

In einer alternativen Anschlussmöglichkeit wird ein Endabschnitt der Rohrleitung durch die Durchgangsöffnung hindurch in den Innenraum des Kontrollschachtes geführt. Der im Innenraum des Kontrollschachtes befindliche Endabschnitt der Rohrleitung wird dabei zweckmäßig, wie vorstehend beschrieben, ebenfalls so geführt, dass er sich in Richtung auf die untere Öffnung des Kontrollschachtes und zur wasserführenden Schicht hin erstreckt und der Auslass der Rohrleitung der wasserführenden Schicht angenähert ist. Um das Eindringen von Schmutz in den Innenraum des Kontrollschachtes zu verhindern, ist zweckmäßig an einem die Durchgangsöffnung umgebenden Rand der Seitenwandung eine elastische Rohrmanschette angebracht. Der Durchmesser der Rohrmanschette verringert sich vorzugsweise entweder stufenweise oder kontinuierlich mit zunehmendem Abstand von der Durchgangsöffnung bzw. Seitenwandung. Auf die richtige Öffnungsweite zugeschnitten, lässt sich die Rohrleitung so durch die Rohrmanschette hindurchführen, dass diese eng am Außenumfang des Rohres anliegt und somit die Durchgangsöffnung dicht verschlossen wird.

Grundsätzlich kann die Durchgangsöffnung an einer beliebigen Stelle der Seitenwandung angebracht sein. Bevorzugt ist es jedoch, die Durchgangsöffnung von der wasserführenden Schicht nach oben beabstandet und bevorzugt in einem oberen Bereich der Seitenwandung anzubringen. Dies erleichtert einerseits die Montage und andererseits eine spätere Kontrolle, Wartung oder Reparatur. Außerdem schafft ein größerer Abstand von der unteren Öffnung des Kontrollschachtes und der wasserführenden Schicht Platz für die Ausrichtung des Endabschnitts der Rohrleitung in Richtung auf die untere Öffnung und die wasserführende Schicht. Da der außerhalb des Kontrollschachtes geführte Teil der Rohrleitung in aller Regel nicht von oben oder schräg oben in den Kontrollschacht hineingeführt werden wird, sondern meistens waagerecht oder von schräg unten, ist es nötig, im Endabschnitt der Rohrleitung im Innenraum des Kontrollschachtes eine Krümmung vorzusehen, damit der Auslass der Rohrleitung in Richtung auf die wasserführende Schicht weist. Der gekrümmte Verlauf der Rohrleitung ist erheblich einfacher zu realisieren, wenn der Eintritt der Rohrleitung in den Kontrollschacht in einem oberen Bereich erfolgt. Alternativ kann der Auslass der Rohrleitung auch in Richtung auf die Seitenwandung des Kontrollschachtes anstatt auf die wasserführende Schicht gerichtet sein.

Um die Rohrleitung im Innenraum des Kontrollschachtes mit dem gewünschten Verlauf zu fixieren, ist dort zweckmäßig wenigstens eine Halterung zur Befestigung des Endabschnitts der Rohrleitung vorhanden. Bevorzugt ist diese wenigstens eine Halterung an der Seitenwandung befestigt. Besonders bevorzugt handelt es sich um eine Rohrschelle, die entweder unmittelbar an der Seitenwandung befestigt ist oder an einer Halteschiene, die ihrerseits entweder einseitig an der Seitenwandung oder an gegenüberliegenden Seiten der Seitenwandung angebracht ist und sich in diesem Fall über die gesamte Breite des Innenraumes erstreckt. Form und Material der Halterung sind nicht weiter beschränkt. Sie kann beispielsweise aus Metall, insbesondere Aluminium oder Edelstahl, und/oder einem geeigneten Kunststoff bestehen. Von Vorteil kann die Halterung wenigstens eine Komponente verwenden, die ohnehin bereits im Innenraum des Kontrollschachtes vorhanden ist und gegebenenfalls nicht nur zur Befestigung der Rohrleitung, sondern auch anderer im Kontrollschacht angeordneter Komponenten dient.

Nach Befestigung an der Halterung ist der Endabschnitt der Rohrleitung, wie erwähnt, bevorzugt so ausgerichtet, dass der Auslass der Rohrleitung in Richtung auf die untere Öffnung des Kontrollschachtes und auf die wasserführende Schicht gerichtet ist. Grundsätzlich ist es möglich, das Wasser aus der Rohrleitung einfach nach unten in die wasserführende Schicht fließen zu lassen. Da das Wasser jedoch unter vergleichsweise hohem Druck aus der Leitung austreten kann, kann es sinnvoll sein, Maßnahmen zu ergreifen, um ein allzu heftiges und konzentriertes Auftreffen des Wasserstrahls aus der Rohrleitung auf die wasserführende Schicht zu verhindern. In einer Weiterbildung der Erfindung ist daher zwischen dem Auslass der Rohrleitung und der wasserführenden Schicht eine Prallplatte, eine Gitterplatte oder ein Lochblech angeordnet. Im Unterschied zu Gitterplatte und Lochblech weist die Prallplatte eine geschlossene Oberfläche auf. Die Prallplatte wird nur in einem Bereich angeordnet, in welchem der Wasserstrahl auf sie auftritt. Gitterplatte und Lochblech dagegen können entweder partiell nur in einem Bereich angeordnet werden, in dem der Wasserstrahl aus der Rohrleitung auf sie auftrifft, oder derart, dass sie sich über den gesamten Querschnitt des Innenraumes des Kontrollschachtes erstrecken. In letzterem Fall dienen Gitterplatte oder Lochblech dann auch als Schmutzfänger, die verhindern, dass Pflanzenteile oder ähnliche Verunreinigungen durch den Kontrollschacht in die wasserführende Schicht gelangen. Davon abgesehen, bremsen Prallplatte, Gitterplatte oder Lochblech den auf sie auftreffenden Wasserstrahl und verteilen diesen über einen breiteren Bereich auf einzelne Teilstrahlen. Wird der Auslass der Rohrleitung auf die Seitenwandung gerichtet, sind Prallplatte, Gitterplatte oder Lochblech nicht erforderlich, da die Seitenwandung den Aufprall des Wasserstrahls aufnimmt und dessen Wucht abschwächt.

Die Aufstellung des Kontrollschachtes im mehrschichtigen Aufbau des Retentionsdaches erfolgt grundsätzlich ebenfalls wie im Stand der Technik. Möglich ist es beispielsweise, den Kontrollschacht unmittelbar auf der Dachabdichtung aufzustellen, beispielsweise in einem Bereich, in dem ein Dachabfluss vorhanden ist. Dies ermöglicht einen unmittelbaren Zugriff durch den Kontrollschacht auf den Dachabfluss und somit dessen Einstellung, Reinigung, Wartung und Reparatur. Um den Wasserfluss in der wasserführenden Schicht nicht zu sehr zu behindern, weist ein direkt auf der Dachabdichtung aufgestellter Kontrollschacht üblicherweise in seinem unteren Bereich Öffnungen auf, durch die Wasser hindurchtreten kann. Die wasserführende Schicht verläuft in diesem Fall auch durch den unteren Bereich des Kontrollschachtes. Alternativ und im vorliegenden Fall bevorzugt wird der Kontrollschacht jedoch oberhalb der wasserführenden Schicht aufgestellt, entweder direkt auf das die wasserführende Schicht definierende Traggerüst oder auf eine auf dem Traggerüst aufliegende Schutz- und Filterschicht. Im Bereich unterhalb des Innenraumes des Kontrollschachtes ist in diesem Fall zweckmäßig kein Traggerüst vorhanden. Während es möglich ist, im Bereich der unteren Öffnung des Kontrollschachtes eine Bodenplatte vorzusehen, die zumindest bereichsweise Öffnungen aufweist, dort wo ein Zugang auf die wasserführende Schicht erforderlich ist, ist es bevorzugt, wenn der Innenraum des Kontrollschachtes nach unten im Bereich der unteren Öffnungsfläche vollkommen unbegrenzt ist. Alternativ ist es möglich, die vorstehend beschriebene Gitterplatte oder das Lochblech am äußersten unteren Rand des Kontrollschachtes anzuordnen.

Eine weitere alternative Ausführungsform der Erfindung besteht darin, die Rohrleitung durch die wasserführende Schicht des Dachaufbaus zum Kontrollschacht zu führen und durch dessen untere Öffnung in dessen Innenraum hinein. Dies geschieht zweckmäßig in Kombination mit der Aufstellungsvariante des Kontrollschachtes oberhalb des Traggerüstes, wie vorstehend beschrieben. Die Rohrleitung weist dazu im Bereich unterhalb des Kontrollschachtes eine Krümmung auf und verläuft dann, zweckmäßig an der Seitenwandung des Kontrollschachtes entlang, im Innenraum des Kontrollschachtes nach oben. Anschließend nimmt die Rohrleitung zweckmäßig erneut einen gekrümmten Verlauf, bis ihr Auslass in Richtung auf die Seitenwandung oder die wasserführende Schicht weist, wie vorstehend in Zusammenhang mit der durch eine Durchgangsöffnung in der Seitenwandung geführten Rohrleitung bereits beschrieben. Die Befestigung des Endabschnitts der Rohrleitung im Kontrollschacht kann ebenfalls auf die schon beschriebene Art und Weise erfolgen. Gleichfalls kann eine Prallplatte, eine Gitterplatte oder ein Lochblech zur Abschwächung des Wasserstrahls eingesetzt werden. In diesem Beispiel erfolgt zwar die Verlegung eines Teils der Rohrleitung in der wasserführenden Schicht, jedoch befinden sich Endabschnitt und Auslass der Rohrleitung im Kontrollschacht. Damit werden auch in diesem Ausführungsbeispiel die Vorteile der leichteren Befestigung, Kontrolle, Wartung und Reparatur erreicht.

Das Niederschlagsmanagement selbst und die Steuerung im Niederschlagsmanagement-System erfolgen grundsätzlich auf die aus dem Stand der Technik bekannte Art und Weise, insbesondere wie in der EP 3 757 300 A1 beschrieben. Zu diesem Zweck kann im System eine Verarbeitungs- und/oder Steuervorrichtung vorhanden sein, welche Messergebnisse auswertet, die von dem System zugeordneten Sensoren geliefert werden. Insbesondere kann das Niederschlagsmanagement-System wenigstens einen Bodenfeuchte-Sensor zur Messung der Bodenfeuchtigkeit des Pflanzsubstrates eines Dachbegrünungsaufbaus aufweisen, mit dessen Hilfe festgestellt werden kann, dass eine Bewässerung des Substrats und der darauf vorhandenen Bepflanzung notwendig ist, wie eingangs beschrieben. Zusätzlich oder alternativ ist wenigstens ein Wasserstandssensor vorhanden, mit welchem der Wasserstand in der wasserführenden Schicht des Retentionsdaches gemessen werden kann. Das Fallen des Wasserstandes unter einen vorgegebenen Minimalwert kann ein weiterer Auslöser dafür sein, dass die Steuervorrichtung einen Befehl ausgibt, der die Pumpe des Systems dazu veranlasst, Wasser aus dem Wasserspeicher durch die Rohrleitung in den Kontrollschacht des Retentionsdaches zu fördern, von wo es in die wasserführende Schicht fließt, bis mindestens der minimale Wasserstand wieder erreicht ist. Zweckmäßig sind weiterhin wenigstens ein Temperatursensor im Bereich des Dachaufbaus und/oder ein Wasserstandssensor im Wasserspeicher vorhanden. Von Vorteil kann ebenfalls auf die im Stand der Technik beschriebene Weise eine Steuerung des Niederschlagsmanagement-Systems unter Berücksichtigung von Wetterprognosedaten erfolgen. Die dafür verwendeten Komponenten und Steuervorgänge entsprechen, wie bereits erwähnt, denjenigen des Standes der Technik und insbesondere dem, was in der EP 3 757 300 A1 beschrieben ist, auf welche hier ausdrücklich Bezug genommen wird.

Wie ebenfalls bereits beschrieben, eignet sich das erfindungsgemäße Niederschlagsmanagement-System für jede Art von Retentionsdach, also grundsätzlich jedes Dach, in dessen Dachaufbau eine wasserführende Schicht vorhanden ist. Besonders bevorzugt handelt es sich bei dem Retentionsdach um ein Gründach oder Verkehrsdach. Selbstverständlich sind auch Kombinationsdächer möglich, bei denen die oberste Schicht neben begrünten Flächen auch begeh- oder befahrbare Flächen umfasst. Das Niederschlagsmanagement-System ist grundsätzlich auch für reine Kiesdächer mit wasserführender Schicht einsetzbar.

Der Wasserspeicher, aus welchem Wasser über die Rohrleitung zum Retentionsdach gefördert wird, kann prinzipiell jeder Wasserspeicher sein, mit Ausnahme der wasserführenden Schicht des Retentionsdaches selbst. Beispielsweise kann es sich um einen Hochspeicher handeln, der auf dem Dachaufbau des Retentionsdaches aufgestellt ist. Bevorzugt ist es allerdings, wenn der Wasserspeicher vom Retentionsdach entfernt gelegen ist. Besonders bevorzugt handelt es sich um eine Zisterne, die beispielsweise in Nachbarschaft des Gebäudes, welche das Retentionsdach trägt, in den Boden eingelassen ist. Alternativ kann der Wasserspeicher eine wasserführende Schicht eines weiteren Retentionsdaches sein. Möglich ist es weiterhin, dass mehrere Wasserspeicher zur Versorgung der wasserführenden Schicht des Retentionsdaches eingesetzt werden, wobei die Wasserspeicher von gleicher oder verschiedener Art sein können. Die Wasserspeicher können in Reihe oder parallel mit dem Kontrollschacht des Retentionsdaches verbunden sein. Dabei ist es möglich, die einzelnen Wasserspeicher an einen Verteiler anzuschließen, von dem aus lediglich eine Rohrleitung in den Kontrollschacht des Retentionsdaches geführt ist. Dabei kann eine einzelne Pumpe, die in der Rohrleitung angeordnet ist, das Pumpen aus sämtlichen Wasserspeichern übernehmen, oder es können mehrere Pumpen und insbesondere je eine Pumpe pro Wasserspeicher eingesetzt werden. Sinnvollerweise hat der Wasserspeicher, oder haben alle Wasserspeicher insgesamt, eine höhere Speicherkapazität als die wasserführende Schicht des Retentionsdaches, damit auch im Falle längerer Trockenheit ausreichend Wasser zur Versorgung der wasserführenden Schicht zur Verfügung steht. Aus diesem Grund sind großvolumige Speicher als Wasserspeicher besonders geeignet. Dient die wasserführende Schicht eines anderen Retentionsdaches als Wasserspeicher, eignen sich daher insbesondere großflächige Retentionsdächer, wie man sie insbesondere bei Tiefgaragendächern findet. Eine bevorzugte Kombination im Rahmen der Erfindung ist daher ein begrüntes Hausdach, dessen wasserführende Schicht mit dem Wasser aus der wasserführenden Schicht eines Tiefgaragendaches versorgt wird.

### KURZE BESCHREIBUNG DER FIGUREN

Die Erfindung soll nachfolgend am Beispiel der beigefügten Zeichnungen näher erläutert werden. Die Zeichnungen sind rein schematischer Natur und nicht maßstabsgetreu. Sie dienen lediglich der Beschreibung bevorzugter Ausführungsformen der Erfindung, ohne dass diese auf die geschilderten Ausführungsformen beschränkt wäre. In den Figuren bezeichnen gleiche Bezugszeichen gleiche Gegenstände oder Teile, ohne dass jeweils alle Gegenstände oder Teile mit Bezugszeichen versehen sind.

In den Figuren zeigen:
- Fig. 1: ein Ausführungsbeispiel eines erfindungsgemäßen Niederschlagsmanagement-Systems in perspektivischer Ansicht;
- Fig. 2: eine Querschnittsansicht eines Dachaufbaus am Beispiel eines Dachbegrünungsaufbaus im Bereich eines Kontrollschachtes;
- Fig. 3: einen Kontrollschacht zur Verwendung im erfindungsgemäßen Niederschlagsmanagement-Systems in perspektivischer Ansicht;
- Fig. 4: eine Rohrmanschette zur Befestigung einer Rohrleitung in perspektivischer Ansicht und
- Fig. 5: einen Adapter zum Anschluss der Rohrleitung an einen Kotrollschacht in perspektivischer Ansicht.

### DETAILLIERTE BESCHREIBUNG DER ERFINDUNG

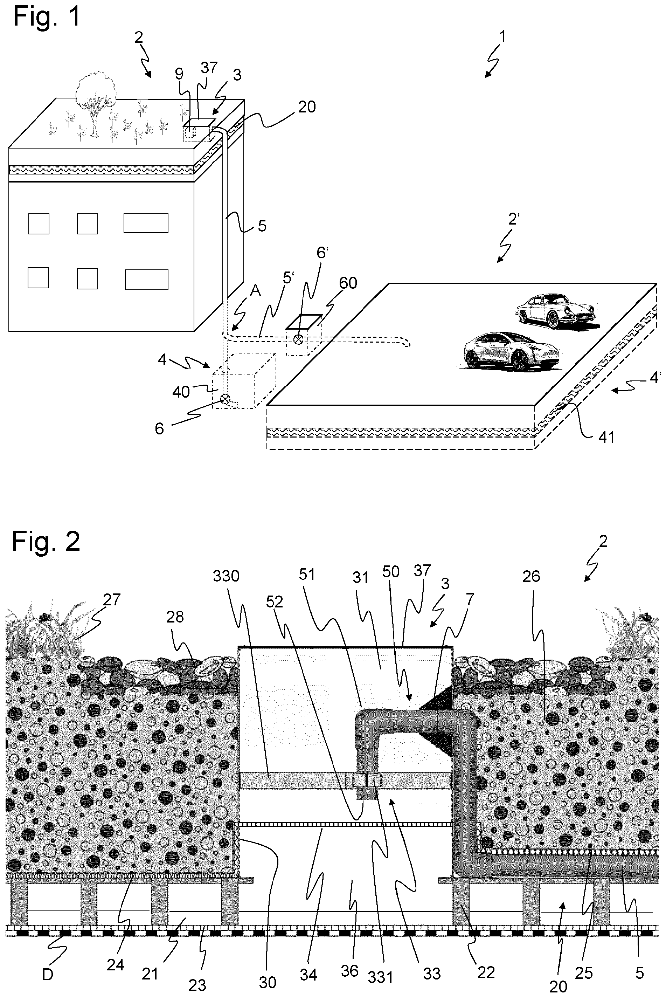

Figur 1 zeigt ein Ausführungsbeispiel eines erfindungsgemäßen Niederschlagsmanagement-Systems 1. Zu diesem gehört ein Retentionsdach 2, bei dem es sich um ein auf einem Bürogebäude angeordnetes Gründach handelt. Das Gründach weist einen mehrschichtigen Dachaufbau auf, wobei eine Schicht eine wasserführende Schicht 20 ist. Im Boden neben dem Bürogebäude ist eine Zisterne 40 als von der wasserführenden Schicht 20 verschiedener Wasserspeicher 4 eingegraben. Die Zisterne 40 wird durch Wasser aufgefüllt, welches vom Retentionsdach 2 aufgefangen und über eine nicht gezeigte Fallleitung in die Zisterne 40 eingeleitet wird. Aus der Zisterne 40 führt eine Rohrleitung 5 nach oben zur Bodenoberfläche und oberhalb des Bodens an einer Hauswand des Bürogebäudes entlang zum Retentionsdach 2. Oberhalb der wasserführenden Schicht 20 ist die Rohrleitung 5 in den Dachbegrünungsaufbau hineingeführt und endet in einem Kontrollschacht 3, der in den Dachbegrünungsaufbau eingelassen ist. Im Inneren des Kontrollschachtes 3 ist eine Verarbeitungs- und/oder Steuervorrichtung 9 angeordnet, mit welcher Messdaten verschiedener, hier nicht eingezeichneter Sensoren empfangen werden können. Zu den Sensoren gehören insbesondere ein Wasserstandssensor zur Messung des Wasserstandes in der wasserführenden Schicht 20, ein Temperatursensor zur Messung der Temperatur in der Umgebung des Dachbegrünungsaufbaus und/oder ein Sensor zur Messung der Bodenfeuchte im Dachbegrünungsaufbau. Die empfangenen Messdaten können entweder in der Verarbeitungs- und/oder Steuervorrichtung 9 selbst ausgewertet und in Steuerbefehle zur Steuerung des Wassermanagements im Niederschlagsmanagement-System 1 umgewandelt werden, oder die Messdaten werden mittels eines in die Verarbeitungs- und/oder Steuervorrichtung integrierten oder separat aufgestellten Senders (oder alternativ kabelgebunden) an eine externe Auswertungs- und Steuervorrichtung übermittelt, welche dann ihrerseits Steuerbefehle an einen Empfänger des Niederschlagsmanagement-Systems 1 zurücksendet, was erneut kabellos oder kabelgebunden erfolgen kann. Die kabellose Übertragung erfolgt bevorzugt per Mobilfunk.

Mithilfe der Steuerbefehle kann insbesondere eine Pumpe 6 in Betrieb gesetzt werden, welche sich in der Zisterne 40 befindet und dazu ausgebildet ist, in der Zisterne gespeichertes Wasser durch die Rohrleitung 5 in den Kontrollschacht 3 zu pumpen. Ein solcher Pumpvorgang wird insbesondere dann ausgelöst, wenn ein Bodenfeuchte-Sensor auf dem Retentionsdach 2 eine unter einem festgelegten Minimalwert liegende Bodenfeuchte ermittelt und/oder wenn ein Wasserstandssensor einen Wasserstand in der wasserführenden Schicht 20 feststellt, der niedriger ist als ein festgelegter Minimalwert. Bei Unterschreitung wenigstens eines der Minimalwerte wird die Pumpe 6 so lange angesteuert und pumpt so lange Wasser durch die Rohrleitung 5 in den Kontrollschacht 3, von wo das Wasser der wasserführenden Schicht 20 zufließt, bis wenigstens der festgelegte minimale Wasserstand wieder erreicht ist. Zweckmäßig ist ebenfalls ein maximaler Wasserstand festgelegt, bei dem der Betrieb der Pumpe 6 unterbrochen wird, um eine Überfüllung der wasserführenden Schicht 20 zu verhindern.
Das zur Bewässerung der Bepflanzung der Dachbegrünung benötigte Wasser kann in an sich bekannter Weise mithilfe von Kapillarsäulen oder Kapillarvlies aus der wasserführenden Schicht in das Pflanzsubstrat transportiert werden. Zusätzlich oder alternativ kann wenigstens eine Bewässerungsvorrichtung (hier nicht eingezeichnet) vorgesehen sein, mit welcher Wasser aus der wasserführenden Schicht 20 zur Bewässerung der Bepflanzung entnommen wird. Die Bewässerung kann mittels Tropfschläuchen und/oder wenigstens einer Sprinklervorrichtung erfolgen. Die Steuerung kann dabei so eingestellt sein, dass ein solcher Bewässerungsvorgang ausgelöst wird, wenn der Bodenfeuchte-Messwert unter einen festgelegten Schwellenwert fällt.

Zu dem Bürogebäude gehört eine Tiefgarage, deren Dach ebenfalls als Retentionsdach gestaltet ist. Es ist mit 2' bezeichnet und als Verkehrsdach mit begeh- und befahrbaren Flächen, hier insbesondere Parkflächen, ausgebildet. Der Aufbau des Retentionsdaches 2' ist ebenfalls mehrschichtig und umfasst eine wasserführende Schicht 41, welche einen weiteren, von der wasserführenden Schicht 20 verschiedenen Wasserspeicher 4' im Niederschlagsmanagement-System 1 bildet. Aufgrund der vergleichsweise großen Ausdehnung des Tiefgaragendaches 2' ist die Aufnahmekapazität der wasserführenden Schicht 41 groß. Der Wasserspeicher 4' eignet sich daher besonders, selbst in längeren Trockenperioden noch ausreichend Wasser bereitzuhalten, das aus regenreicheren Zeiten noch dort gespeichert ist. Dieses gespeicherte Wasser kann aus der wasserführenden Schicht 41 mittels einer Rohrleitung 5' entnommen werden. Im gezeigten Beispiel mündet die unterirdisch verlegte Rohrleitung 5' in dem mit A gekennzeichnet Bereich in die senkrecht verlaufende Rohrleitung 5 ein. Zum Fördern des Wassers aus der wasserführenden Schicht 41 in den Kontrollschacht 3 dient eine Pumpe 6'. Diese ist im gezeigten Beispiel in einem außerhalb des Retentionsdaches 2' angeordneten Pumpengehäuse 60 angeordnet, welches neben dem Retentionsdach 2' in den Boden eingelassen und mit einem bodenbündigen Deckel 60 verschlossen ist.

Grundsätzlich soll Figur 1 mehrere alternative Ausführungsformen eines erfindungsgemäßen Niederschlagsmanagement-Systems 1 verdeutlichen. In einer ersten Ausführungsform kann lediglich das bereits beschriebene System mit einem Wasserspeicher 4 in Form der Zisterne 40 vorhanden sein, während der zweite Wasserspeicher 4' und gegebenenfalls das Tiefgaragendach 2' überhaupt nicht vorhanden sind oder der Wasserspeicher 4' nicht über eine Rohrleitung mit dem Kontrollschacht 3 verbunden ist. In einer zweiten Ausführungsform kann umgekehrt der Wasserspeicher 4' über die Rohrleitungen 5' und 5 mit dem Kontrollschacht verbunden sein, während keine Verbindung zwischen Kontrollschacht 3 und Wasserspeicher 4/Zisterne 40 besteht oder letztere gar nicht vorhanden sind. In einer dritten Ausführungsform sind sowohl der Wasserspeicher 4 als auch der Wasserspeicher 4' vorhanden und über die Rohrleitungen 5, 5' mit dem Kontrollschacht verbunden. Im Bereich A befindet sich dann beispielsweise ein Verteiler wie ein Y-Anschlussstück. Alternativ können die beiden Wasserspeicher 4, 4' auch jeweils separat mit dem Kontrollschacht 3 verbunden sein, das heißt, es führen zwei getrennte Rohrleitungen zum Kontrollschacht 3.

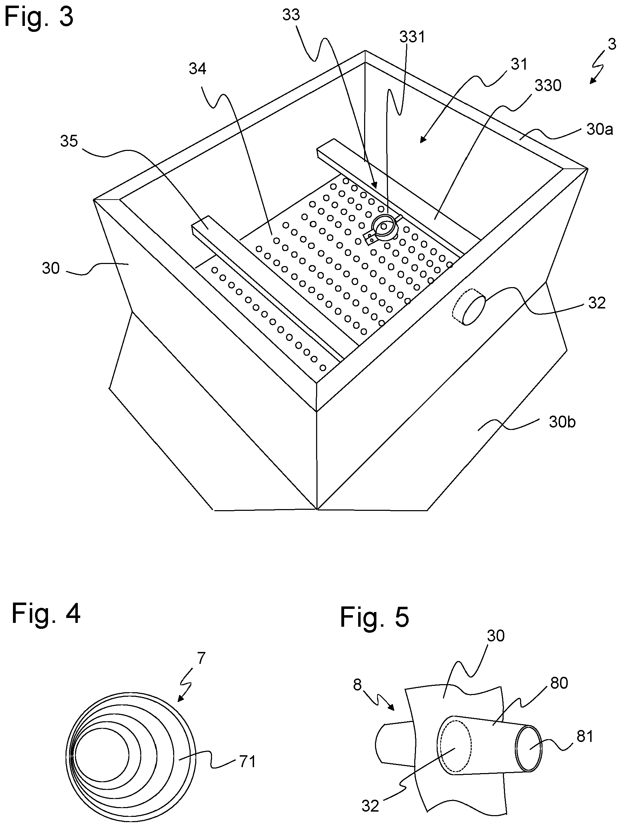

Figur 2 zeigt einen möglichen Dachaufbau des Retentionsdaches 2 am Beispiel eines Dachbegrünungsaufbaus in Schnittansicht und gibt den Blick in den Innenraum 31 des in den mehrschichtigen Dachbegrünungsaufbau integrierten Kontrollschachtes 3 frei. Figur 3 zeigt eine perspektivische Ansicht des nicht eingebauten Kontrollschachtes in perspektivischer Ansicht auf seine Oberseite. Der Kontrollschacht wird von einer Seitenwandung 30 begrenzt, die im gezeigten Fall aus vier miteinander verbundenen und in rechtem Winkel zueinander stehenden Wandpaneelen besteht, die einen quaderförmigen Innenraum 31 seitlich begrenzen. Figur 3 gibt den Blick in den Innenraum 31 frei, da der Deckel (vgl. 37 in Figuren 1 und 2), der auf dem oberen, rechtwinklig nach innen abgekanteten Rand 30a der Seitenwandung 30 abgelegt werden kann, um den Kontrollschacht nach oben zu verschließen, abgenommen ist. Am unteren, zur Dachfläche weisenden Rand sind vier von der Seitenwandung 30 rechtwinklig nach außen abgekantete Standflächen 30b vorhanden, um dem Kontrollschacht 3 einen sicheren Stand zu verleihen. Die von der Seitenwandung 30 begrenzte untere Öffnung 36 (siehe Figur 2) ist nicht von einer Bodenplatte verschlossen. In Figur 3 ist die untere Öffnung 36 nicht sichtbar, da sie von einer Lochplatte 34 verdeckt wird. Die Lochplatte 34, auf die später noch näher eingegangen werden wird, kann, falls erforderlich, aus dem Innenraum 31 des Kontrollschachtes 3 entnommen werden, um einen ungehinderten Zugriff auf die unterhalb befindlichen Bereiche des Dachaufbaus zu ermöglichen. Das Material der Seitenwandung 30 sowie der abgekanteten Randbereiche 30a und Standflächen 30b besteht zweckmäßig aus Aluminium- oder Edelstahlblech.

Im Innenraum 31 des Kontrollschachtes 3 sind zwei Tragholme 35 befestigt. Beide Tragholme verlaufen über die gesamte Breite des Innenraumes 31 und sind an zwei gegenüberliegenden Innenseiten der Seitenwandung 30 befestigt. Die Tragholme sind dabei so angebracht, dass sie in gleichem Abstand von der unteren Öffnung 36 an der Seitenwandung 30 befestigt sind und parallel zur unteren Öffnungsfläche verlaufen. Einer der beiden Tragholme 35 dient als Halteschiene 330, welche zusammen mit einer an ihr befestigten Rohrschelle 331 Bestandteil einer Halterung 33 ist, welche zur Befestigung der Rohrleitung 5 und konkret von deren im Innenraum 31 des Kontrollschachtes 3 verlaufenden Endabschnitt 50 dient. Figur 2 zeigt den Endabschnitt 50 der Rohrleitung 5 an der Halterung 33 befestigt. Der Endabschnitt 50 der Rohrleitung ist durch eine Durchgangsöffnung 32, welche sich in einem oberen Abschnitt der Seitenwandung 30 des Kontrollschachtes befindet, in dessen Innenraum 31 hineingeführt, wo er zunächst waagerecht bis in die Nähe des Zentrums des Innenraumes geführt ist. Dort biegt die Rohrleitung in einem rechten Winkel nach unten um, sodass der äußerste Teil des Endabschnitts 50 nach der Krümmung 51 im Wesentlichen senkrecht zur Oberfläche des Wassers 21 in der wasserführenden Schicht 20 verläuft. Die Auslassöffnung 52 der Rohrleitung ist im Wesentlichen waagerecht und parallel zur Oberfläche des Wassers 21 angeordnet.

Zwischen dem Auslass 52 am Endabschnitt 50 der Rohrleitung 5 und der wasserführenden Schicht 20 ist ein Lochblech 34 angeordnet, das über den gesamten Querschnitt des Innenraumes 31 im Kontrollschacht verläuft. Wasser, welches aus dem Auslass 52 der Rohrleitung 5 austritt, trifft damit zuerst auf das Lochblech 34, bevor es durch dieses hindurchfließt und in die wasserführende Schicht 20 fällt. Das Lochblech 34 bremst somit das unter Druck aus der Rohrleitung 5 austretende Wasser und verteilt dieses, sodass es mit geringerem Druck über eine breitere Fläche dem Wasserreservoir in der wasserführenden Schicht 20 zufließt. Zudem verhindert das Lochblech 34, dass Verunreinigungen wie Blätter oder sonstige Pflanzenteile in die wasserführende Schicht gelangen.

Außerhalb des Kontrollschachtes 3 wird die Rohrleitung 5 im Bereich des mehrschichtigen Aufbaus der Dachbegrünung so geführt, dass sie auf der Oberseite des Traggerüstes 22 aufliegt, welches den Hohlraum der wasserführenden Schicht 20 definiert. An der äußeren Seitenwandung 30 des Kontrollschachtes 3 wird die Rohrleitung 5 nach oben bis zu der Durchgangsöffnung 32 geführt, durch welche hindurch die Rohrleitung 5 dann, wie beschrieben, in den Innenraum 31 des Kontrollschachtes 3 eintritt. An den die Durchgangsöffnung 32 umgebenden Rand der Seitenwandung 30 ist eine Rohrmanschette 7 montiert, welche die Seitenwandung 30 gegen die Rohrleitung 5 abdichtet. Eine geeignete Rohrmanschette ist in Figur 4 dargestellt. Sie besteht aus einem elastischen Material, insbesondere einem elastischen Kunststoff und bevorzugt Gummi. Die Rohrmanschette 7 weist im Wesentlichen die Form eines Stufenkegels auf und verjüngt sich von dem Bereich ihres größten Durchmessers, wo die Rohrmanschette am Rand der Durchgangsöffnung 32 an der Seitenwandung 30 befestigt ist, in mehreren Stufen 71 nach außen von der Seitenwandung weg. Die Rohrmanschette 7 wird vor Gebrauch durch Abschneiden von Stufen zu geringen Durchmessers so zugeschnitten, dass der Öffnungsdurchmesser der verbleibenden kleinsten Stufe zum Außendurchmesser der Rohrleitung 5 passt. Wird der Endbereich 50 der Rohrleitung 5 durch die Durchgangsöffnung 32 und die Rohrmanschette 7 hindurchgeschoben, schmiegt sich der ringförmige Rand des freien Endes der Rohrmanschette an den Außenumfang der Rohrleitung an, sodass der Spalt zwischen dem die Durchgangsöffnung 32 umgebenden Rand der Seitenwandung 30 und der Rohrleitung 5 dicht verschlossen wird. Dies verhindert das Eindringen von Pflanzsubstrat 26, welches nach der Montage der Rohrleitung 5 auf die darunterliegenden Schichten des Dachbegrünungsaufbaus aufgebracht wird.

Dieser Dachbegrünungsaufbau kann hinsichtlich seiner Schichtabfolge dem entsprechen, was aus dem Stand der Technik bekannt ist. Im konkreten Beispiel ist auf die Dachabdichtung zunächst eine Schutzschicht 23 aufgelegt, auf welcher Wasser-Retentionsboxen aufgestellt sind, welche das Traggerüst 22 der wasserführenden Schicht 20 bilden. Im Bereich unterhalb des Kontrollschachtes 3 sind keine Wasser-Retentionsboxen vorhanden, um einen Zugang durch den Kontrollschacht auf die wasserführende Schicht 20 zu ermöglichen. Auf die Oberseite des Traggerüstes 22 ist eine Vliesschicht 24 aufgelegt, die zwar Wasser aus den oberen Schichten in die wasserführende Schicht 20 durchsickern lässt, den Durchtritt von Substratbestandteilen jedoch verhindert. Oberhalb der Rohrleitung ist eine stabilere Schutzschicht 25 vorhanden. Auf Vliesschicht 24 und Schutzschicht 25 ist dann eine Schicht 26 aus Pflanzsubstrat aufgebracht, die auf ihrer Oberseite eine Bepflanzung 27 trägt. Im Bereich um den Kontrollschacht 3 herum ist anstelle der Bepflanzung eine Kiesschüttung 28 vorhanden. Der Kontrollschacht steht mit den ausgestellten unteren Standflächen 30b auf der Oberseite des Traggerüstes 22 und erstreckt sich durch sämtliche oberhalb des Traggerüstes angeordneten Schichten bis an die Oberfläche des Dachbegrünungsaufbaus. Dort ist die obere Öffnung des Kontrollschachtes 3 mit einem Deckel 37 verschlossen. Dieser Deckel ist aufklapp- oder abnehmbar und erlaubt so einen einfachen Zugriff auf den Innenraum 31 des Kontrollschachtes 3. Dies erleichtert nicht nur die Befestigung des Endabschnitts 51 der Rohrleitung 5 an der die Halteschiene 330 und die Rohrschelle 331 umfassenden Halterung 33, sondern auch spätere Kontrollen, Wartungen oder Reparaturen.

Figur 5 zeigt einen Adapter 8, der anstelle der Rohrmanschette 7 zum Anschluss der Rohrleitung 5 an den Kontrollschacht 3 dienen kann. Dazu wird der Adapter im Bereich der DurchgangsÖffnung 32 an der Seitenwandung 30 des Kontrollschachtes befestigt. Dies kann zum Beispiel in an sich bekannter Art und Weise dadurch erfolgen, dass ein innenseitiger und ein außenseitiger Teil des Adapters gegen die Seitenwandung 30 miteinander verschraubt werden. Der Adapter 8 weist zu beiden Seiten Adaptertüllen 80 auf, deren Durchmesser sich nach außen hin verkleinert. Auf die äußere Adaptertülle wird ein Ende der Rohrleitung 5 aufgeschoben, auf die innere Adaptertülle ein Ende eines von der äußeren Rohrleitung 5 verschiedenen Rohrleitungsstücks 51. Im Inneren des Adapters 8 verläuft eine Durchgangsöffnung 81, durch welche hindurch Wasser von der äußeren Rohrleitung 5 in das innere Rohrleitungsstück 51 gelangen kann. Der Verlauf der Rohrleitung kann demjenigen entsprechen, der in Figur 2 gezeigt ist. In beiden Fällen kann im Übrigen anstelle der steifen Rohrstücke in Bereichen mit Krümmungen auch ein flexibler Schlauch verlegt werden.

### BEZUGSZEICHENLISTE

- 1: Niederschlagsmanagement-System
- 2, 2': Retentionsdach
- 20: wasserführende Schicht
- 21: Wasser
- 22: Traggerüst
- 23: Schutzschicht
- 24: Vliesschicht
- 25: Schutzschicht
- 26: Pflanzsubstrat
- 27: Bepflanzung
- 28: Kiesschüttung
- 3: Kontrollschacht
- 30: Seitenwandung
- 30a: Randbereich
- 30b: Standfläche
- 31: Innenraum
- 32: Durchgangsöffnung
- 33: Halterung
- 330: Halteschiene
- 331: Rohrschelle
- 34: Lochblech
- 35: Tragholm
- 36: Untere Öffnung
- 37: Deckel
- 4, 4': Wasserspeicher
- 40: Zisterne
- 41: Wasserführende Schicht von 2'
- 5: Rohrleitung
- 50: Endabschnitt
- 51: Krümmung
- 52: Auslass
- 6, 6': Pumpe
- 60: Pumpengehäuse
- 7: Rohrmanschette
- 70: Manschettenstufe
- 8: Adapter
- 80: Adaptertülle
- 81: Adapteröffnung
- 9: Verarbeitungs- und/oder Steuervorrichtung
- A: Bereich mit alternativem Anschluss oder Abzweigung

## Patentansprüche

1. Niederschlagsmanagement-System (1), umfassend
- ein Retentionsdach (2), das einen mehrschichtigen Aufbau aufweist, wobei eine der Schichten eine wasserführende Schicht (20) ist, sowie mit einem Kontrollschacht (3), der im mehrschichtigen Aufbau angeordnet ist,
- einen Wasserspeicher (4, 4'), der von der wasserführenden Schicht (20) verschieden ist,
- eine Rohrleitung (5, 5'), welche den Wasserspeicher (4, 4') mit dem Kontrollschacht (3) verbindet, sowie
- eine Pumpe (6, 6'), welche dazu angeordnet und ausgebildet ist, Wasser aus dem Wasserspeicher (4, 4') durch die Rohrleitung (5, 5') in den Kontrollschacht (3) zu pumpen.

2. Niederschlagsmanagement-System nach Anspruch 1,
worin der Kontrollschacht (3) eine Seitenwandung (30) aufweist, welche einen Innenraum (31) des Kontrollschachtes (3) seitlich begrenzt, wobei in der Seitenwandung (30) eine Durchgangsöffnung (32) vorhanden ist, durch welche Wasser aus dem Wasserspeicher (4, 4') in den Innenraum (31) des Kontrollschachtes (3) eingeleitet wird.

3. Niederschlagsmanagement-System nach Anspruch 2,
worin an die Seitenwandung (30) im Bereich der Durchgangsöffnung (32) ein Adapter (8) montiert ist, an welchen ein Ende der Rohrleitung (5, 5') angeschlossen ist.

4. Niederschlagsmanagement-System nach Anspruch 2,
worin ein Endabschnitt (50) der Rohrleitung (5, 5') durch die Durchgangsöffnung (32) hindurch in den Innenraum (31) geführt ist, wobei bevorzugt an einem die Durchgangsöffnung (32) umgebenden Rand der Seitenwandung (30) eine elastische Rohrmanschette (7) angebracht ist.

5. Niederschlagsmanagement-System nach einem der Ansprüche 2 bis 4,
worin die Durchgangsöffnung (32) von der wasserführenden Schicht (20) nach oben beabstandet und bevorzugt in einem oberen Bereich der Seitenwandung (30) angebracht ist.

6. Niederschlagsmanagement-System nach Anspruch 1,
worin die Rohrleitung (5, 5') durch die wasserführende Schicht (20) verlegt und ein Endabschnitt der Rohrleitung (5, 5') durch eine untere Öffnung (36) des Kontrollschachtes (3) in dessen Innenraum (31) geführt ist.

7. Niederschlagsmanagement-System nach einem der Ansprüche 4 bis 6,
worin der Endabschnitt (50) der Rohrleitung (5, 5') eine Krümmung (51) aufweist, sodass der Auslass (52) der Rohrleitung (5) in Richtung auf die wasserführende Schicht (20) oder die Seitenwandung (30) weist.

8. Niederschlagsmanagement-System nach einem der Ansprüche 4 bis 7,
worin im Innenraum (31) des Kontrollschachtes (3) wenigstens eine Halterung (33) zur Befestigung des Endabschnitts (50) der Rohrleitung (5) vorhanden ist, wobei die wenigstens eine Halterung (33) bevorzugt eine Rohrschelle (331) aufweist, die an der Seitenwandung (30) oder einer im Innenraum (31) angebrachten Halteschiene (330) befestigt ist.

9. Niederschlagsmanagement-System nach einem der vorhergehenden Ansprüche,
worin der Kontrollschacht (3) oberhalb der wasserführenden Schicht (20) aufgestellt ist.

10. Niederschlagsmanagement-System nach einem der vorhergehenden Ansprüche,
worin im Innenraum (31) des Kontrollschachtes (3) zwischen dem Auslass (52) der Rohrleitung (5, 5') und der wasserführenden Schicht (20) eine Prallplatte, eine Gitterplatte oder ein Lochblech (34) angeordnet ist.

11. Niederschlagsmanagement-System nach einem der vorhergehenden Ansprüche,
worin das Retentionsdach (2) ein Gründach oder Verkehrsdach ist.

12. Niederschlagsmanagement-System nach einem der vorhergehenden Ansprüche,
worin der Wasserspeicher (4, 4') vom Retentionsdach (2) entfernt gelegen und bevorzugt eine Zisterne (40) oder eine wasserführende Schicht (41) eines weiteren Retentionsdaches (2'), insbesondere eines Tiefgaragendaches, ist.
